# EUROPEAN PATENT APPLICATION

(11) **EP 4 557 539 A1**
(43) Date of publication of application: **21.05.2025**
(21) Application number: 24212862.7
(22) Date of filing: 14.11.2024
(51) Int. Cl.: H02G 1/14, H02G 15/08, H02G 15/14

(54) **METHOD AND ASSEMBLY FOR JOINTING THE ARMOURS OF POWER CABLES**

(30) Priority: 14.11.2023 IT 202300024033
(71) Applicant: Prysmian S.p.A., 20126 Milan (IT)
(72) Inventor: CONSONNI, Enrico Maria, 20126 Milano (MI) (IT); CORDO', Federico, 20126 Milano (MI) (IT); TROLLI, Alessandro, 20126 Milano (MI) (IT)
(74) Representative: Biallo, Dario

(57) **Abstract**

An armour joint assembly (20) for power cables (100) comprising:
- two tubes (21) adapted to be fit over the power cables (100), each tube (21) being provided with a respective flange (22);
- a plurality of annular spacers (23) intended to be positioned in succession to each other between the two flanges (22);
- two sorting organizers (30) positioned on the side of the two flanges (22) respectively, each sorting organizer (30) comprising at least one annular element (33,33',34,34') adapted to arrange respective armour wires (131, 131') of the respective power cable (100);
- two cone shells (24), each adapted to be positioned around the respective power cable (100) and to be coupled to the respective flange (22) so as to make a closed shell (25) enclosing the respective sorting organizer (30), the cone shells (24) being provided with a loading aperture (26) for inserting a resin.

## Description

### Background of the disclosure

The present disclosure refers to a method and an assembly for jointing the armours of power cables, in particular submarine power cables.

The present disclosure refers also to a joint system comprising the above armour joint assembly applied on two joined power cables.

Typically, a submarine power cable includes at least one cable core usually formed by an electrically conductive metal conductor covered by an insulation system. The insulation system comprises sequentially an inner semiconductive layer, an intermediate insulating layer, and an outer semiconductive layer.

The insulation system can be made of extruded polymeric material or of oil-impregnated paper or paper polypropylene laminate.

The submarine power cable core should be protected from humidity or water penetration that may lead to electrical breakdown. For this purpose, submarine power cables typically include a metallic barrier surrounding each cable core of the power cable so as to block water penetration during installation and operation of the cables. The metallic barrier, then, generally surrounds the insulation system and can be made of aluminium, lead or copper.

The metallic barrier can be made by extrusion, especially in case of a lead barrier, or in form of a longitudinally folded sheath with welded rims or overlapped and glued rims.

Furthermore, the metallic barrier is covered by a polymeric, optionally semiconductive, protective sheath, for example a polyethylene sheath.

The submarine power cables intended to be used at very high depths comprise also one or more layers of armour wires helically wound around the cable core in order to provide suitable tensile resistance, especially during the cable deployment when lengths of the cables are suspended from the ship.

For example, the armour wires can be made of a metal, generally steel, or of tensile-resistant polymer.

The outermost armour layer can then be surrounded by a serving layer in order to avoid abrasion. For example, the serving layer can be made by bituminous polypropylene yarns.

The submarine cables are usually joined together in order to form a single cable line with an extension of many Kilometers or in order to repair a damaged cable. During jointing operation, all the layers surrounding the conductors are cut and removed at the ends of the cables to be joined, thus leaving exposed the end of the conductors. The junction is performed according to known procedures between the two respective exposed conductors, for example by using a ferrule or a reinforced MIG welding or other similar methods involving ferrule and welding on both side and final mechanical connection. Then, the restoration of the insulation system, the metallic barrier and the protective sheath is performed according to known procedures.

Jointing two submarine power cables implies also coupling the respective armour layer/s to each other.

Such coupling may be made by welding operations according to known procedures.

In particular, the armour wires are suitably arranged on the cable so to replicate their original lay lenght and equalizing their lengths as much as possible, then each armour wire of one cable is jointed to an armour wire of the other cable. In the case of metal wires, the joint is carried out by welding. In the case of polymeric wires, the joint can be carried out by a combination of resins and suitable overlap, or other mechanical tools. It is apparent that in both cases the wire jointing operation is time-consuming, but it also takes much space, generally a length from some meters, for example five, for the metal wires, to tens of meters for the polymeric wires. On the ship it is therefore necessary to have even more space to be able to operate correctly.

Alternatively, an armour joint assembly may be used, which is an accessory to which the armour layers of the joined cables are fixed.

In particular, an armour joint assembly should ensure the same tensile resistance of the armour layer/s and should maintain a quick reaction of the armour wires to tensile application to minimize any overstress transfer to the conductors in the cable joint.

To this aim, known armour joint assemblies provide for pre-tensioning tools, but the problem remains of obtaining a suitable pre-tensioning for all the wires of an armour layer in a safe and efficient way.

The choice of the use of welding and of the kind of armour joint depends on the features of the armours to be joined.

For example, when armour wires made of steels with a high carbon content are used, the arc welding, applicable on such armour wires when they are already positioned on the cable in their final position, may determine an embrittlement of the zones located near the weldings and heat affected. This is very risky when the armor is stressed by the efforts resulting from the pulling and bending of the cable. In this case it could be convenient to use an armour joint assembly instead of the arc welding.

Analogous problems may arise when it is required to join a metallic armor and a synthetic armor.

JP5875187 relates to an armored iron wire connection fitting used in a connection portion of a cable having an iron wire armour, such as a submarine cable, and a method of connecting armored iron wires using the same. The method for connecting the armour iron wire includes:
- fixing the armor wire of one cable to the fixing part of the first iron wire fixing fitting by welding,
- fixing the armour iron wire of the other cable to the fixing part of the second iron wire fixing fitting by welding,
- a tightening member tightens the flange pieces of the first and second iron wire fixing fittings in a direction to approach each other, connecting the first and second iron wire fixing fittings, and applying tension to the armored iron wires of both cables.

JP2014087201 and KR20110100356 describes other examples of a joint for armour iron or steel wires of two power cables.

### Summary of the disclosure

The Applicant faced the problem of providing an assembly for jointing the armours of power cables capable of allowing a simple, well-ordered and quick positioning of the armour wires and capable of immediately bearing the high tensile stress when the jointed cables are tensioned assuring that the junction between the conductors bears a minimum part of the tensile stress.

In view of the above problem, the Applicant has thought to provide the armour joint assembly with two sorting organizers arranged at the joint area around the cables, wherein each sorting organizer comprises a respective series of seats intended for receiving the armour wires of the power cable to be joined. In particular, the seats of a series are opened towards one of the power cables and the seats of another series are opened towards the other one of the power cables. Moreover, the Applicant considered to arrange the series of seats of the two sorting organizer spaced to each other with a distance that, after having arranged the armour wires into the respective seats, can be reduced in a deterministic way in order to provide a certain pre-tensioning of the armour wires. Then, the Applicant considered to enclose the sorting organizers with the already arranged wires within a shell in which a resin is inserted in order to fix the wires into the respective seats.

In view of the above tricks, the Applicant experienced that the pre-tensioning of the wires can be set in a certain and repetitive way assuring that the performance of the armours is close to the design specification independently from the skill of the operators that realized the joint. Moreover, the joint can be done in a very simple and reliable way even in the case of non-metallic armour wires or in the case of two armours of different type and material.

Therefore, according to a first aspect, the present disclosure relates to an armour joint assembly for power cables comprising:
- two tubes adapted to be fit over the power cables, each tube being provided with a respective flange;
- a plurality of annular spacers intended to be positioned in succession to each other between the two flanges ;
- two sorting organizers positioned on the side of the two flanges respectively, each sorting organizer comprising at least one annular element adapted to arrange respective armour wires of the respective power cable;
- two cone shells, each adapted to be positioned around the respective power cable and to be coupled to the respective flange so as to make a closed shell enclosing the respective sorting organizer, each cone shell being provided with a loading aperture for inserting a resin.

In an embodiment, each of the two tubes and the respective flange forms a single body in form of a flanged tube. In an alternative embodiment, each of the two tube and the respective flange are elements operatively connected one with the other.

In an embodiment, each sorting organizer comprises one annular element for supporting one armour layer of the relevant cable. In this embodiment, each annular element has a series of seats provided, for example, in a radially outer surface thereof, and intended to receive one armour wire each. Each annular element is provided on the side of a respective flange.

In an embodiment, when each cable has two armour layers, i.e. an inner and an outer armour layer, each sorting organizer comprises two annular elements positioned on the side of the respective flange and superposed to each other in a radial direction, the radially inner annular element being intended to receive in its series of seats respective armour wires of an inner armour layer of the respective power cable, the radially outer annular element being intended to receive in its series of seats respective armour wires of an outer armour layer of the respective power cable. In such embodiment, the series of seats of the annular elements may be made in form of a plurality of grooves carved on the radially outer surface of the annular elements, each groove having a width such to accomodate a respective armour wire.

In this way the positioning of the armour wires is very quick and simple.

In such embodiment, each sorting organizer can comprise one or more fastening elements, e.g. elastic rings, intended to be positioned around the armour wires once arranged into the seats.

In this way, the armour wires can be firmly kept into the grooves.

In an embodiment the grooves are parallel to each other and inclined with respect to the longitudinal axis of the joint with substantially the same angle of the lay angle of the relevant armour wire layer.

In this way the armour wires arranged into the grooves maintain substantially the original lay length they have around the respective cable thus assuring a uniform axial stiffnes contribuition. To match the original lay length as much as possible each annular element bearing the armour wires may be rotated around the longitudinal axis of the relevant cable. The rotation can be effected before the positioning of the cone shell and is to be effected before the insertion of the resin.

In an alternative embodiment, each flange comprises at least one plurality of first holes, either through holes or blind holes, arranged in a circumferential fashion, and each sorting organizer comprises a first annular element in form of a washer comprising at least one plurality of second holes, which are through holes, arranged in a circumferential fashion around the central hole. The at least one annular element is intended to be arranged on the side of the relevant flange juxtaposing the plurality of second holes to the plurality of first holes .

In this case, length sections of the armour wires of one armour layer are arranged in a radial pattern against the relevant flange taking care not to cover the first holes. The annular element is positioned against the length sections and fastens them against the flange by blocking elements, e.g. threaded rods and nuts, each passing through one second and into or through first holes. Once the annular element is arranged against the length sections and the blocking elements are inserted, it is possible to rotate the annular element and the flange together so that the armour wires are brought to reproduce the helical direction of the winding of the armour layer on the cable.

When each cable has more than one armour layer each sorting organizer comprises one annular element for each armour layer. In the case of two armour layers, i.e. an inner and an outer armour layer, a first annular element is intended to be arranged against the armour wires of the inner layer and on the side of the flange and a second annular element intended to be arranged against the armour wires of the outer armour layer and on the side of the first annular element. The first annular element in form of a washer comprises at least one plurality of second holes, which are through holes, arranged in a circumferential fashion around the central hole. The second annular element in form of a washer comprises a plurality of third holes, which are through holes, arranged in a circumferential fashion around the central hole and intended to be juxtaposed to the second holes when the second annular element is arranged on the side of the first annular element.

In case of a power cable with two armour layers, length sections of the armour wires of the inner armour layer are arranged against the relevant flange as disclosed above. After positioning and fastening of the first annular element on the side of the flange, length sections of the armour wires of the outer armour layer are arranged in a radial pattern against the relevant first annular element between the blocking elements fastening the first annular element on the side of the flange. The second annular element is positioned against these length sections and fastens them against the first annular element by using the blocking elements already present in the second holes and now each passing through one third holes. For example, the fastening takes place by inserting a further nut on the already present threaded rods passing through the respective first, the second and the third hole.

In an embodiment, the flange and/or the annular element/s in form of washer comprises two pluralities of first, second and/or third holes respectively in order to improve mechanical stability.

The flanges of the present armour joint assembly can have a plurality of fourth hole, which are through holes, arranged in a circumferential fashion in radial outer position with respect to any plurality of first holes.

In an embodiment, the two cone shells of the armour joint assembly have each a plurality of holes arranged in a circumferential fashion and intended to be juxtaposed to the fourth holes of the relevant flange. In particular, one of the cone shell has a plurality of fifth holes, which are through holes, and the other cone shell has a plurality of sixth holes, which are blind holes.

In an embodiment the cone shells can be provided with a vent opening in order to monitor the insertion of the resin within the shell.

According to a second aspect, the present disclosure refers to a joint system comprising:
- a first power cable and a second power cable, each one of the power cables comprising at least one cable core in turn comprising an electric conductor, an insulation system surrounding the electric conductor; optionally one or more protective layers surrounding the cable core, and one or more armour layers surrounding the at least one cable core and, if any, one or more protective layers, wherein the electric conductors of the power cables are electrically joined to each other to form a core joint;
- an armour joint assembly as above disclosed positioned around the power cables.

In an embodiment, the armour joint can be positioned at the core joint or aside thereof.

In another aspect the present disclosure relates to a method for installing the above armour joint assembly around two joined power cable cores, the method comprising the steps of:
- providing two tubes with respective flanges and the two sorting organizers positioned on the side of the two flanges respectively , the flanges being separated by the plurality of annular spacers positioned in succession to each other in order to define an initial distance between the two flanges;
- operatively associating each wire of an armour layer to the sorting organizers;
- enclosing the sorting organizers in two cone shells provided with at least one loading aperture;
- fixing each cone shell to the respective flange by means of at least one fixing element passing through a relevant fifth hole, a relevant fourth hole and being inserted into a relevant sixth hole to make a closed shell forming a space;
- filling the space within each closed shell with a socketing resin;
- once the socketing resin is cured, taking one or more annular spacers off while approaching the two central flanges one to the other by means of the at least one fixing element thus stepwise pre-tensioning the armour wires to obtain a predetermined tension for all of the armour wires.

For the purposes of the present invention, as "exposed layer of the power cable" it is meant that any further layer possibly arranged around such exposed layer have been removed, so that the exposed layer can be directly contacted from outside.

For the purpose of the present description and of the claims that follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

Also, the terms "a" and "an" are employed to describe elements and components of the disclosure. This is done merely for convenience and to give a general sense of the disclosure. This description should be read to include one or at least one, and the singular also includes the plural unless it is obvious that it is meant otherwise.

As "insulating layer" it is meant a layer made of a material having a conductivity comprised between 10⁻¹⁶ and 10⁻¹⁴ S/m.

As "semiconductive layer" it is meant a layer made of a material having a conductivity comprised between 10⁻¹ and 10 S/m.

### Brief description of the drawings

Further characteristics will be apparent from the detailed description given hereinafter with reference to the accompanying drawings, in which:
- Figures 1a-1e are schematic perspective partial views of a succession of steps of a method for jointing the armours of joined power cables according to a first embodiment of the present disclosure;
- Figure 1f is a view of a detail of Figure 1e;
- Figure 2 is a schematic side partial view of a phase of the method according to a first embodiment of the present disclosure;
- Figure 3 is a schematic side view of the joint system according to the present disclosure;
- Figure 4 is a schematic sectioned view of the armour joint assembly according to a first embodiment of the present disclosure applied on two joined power cables;

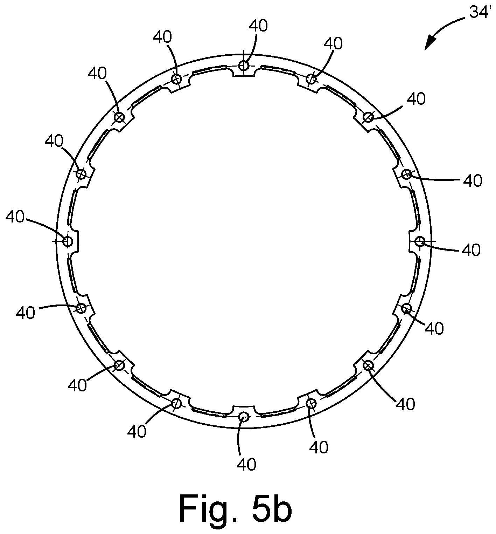

- Figures 5a and 5b are schematic views of two annular elements in form of washer of a sorting organizer comprised in an armour joint assembley according to a second embodiment of the present disclosure;
- Figure 6a-6g are schematic perspective partial views of a succession of steps of a method for jointing the armours of joined power cables according to a second embodiment of the present disclosure.

### Detailed description of some embodiments

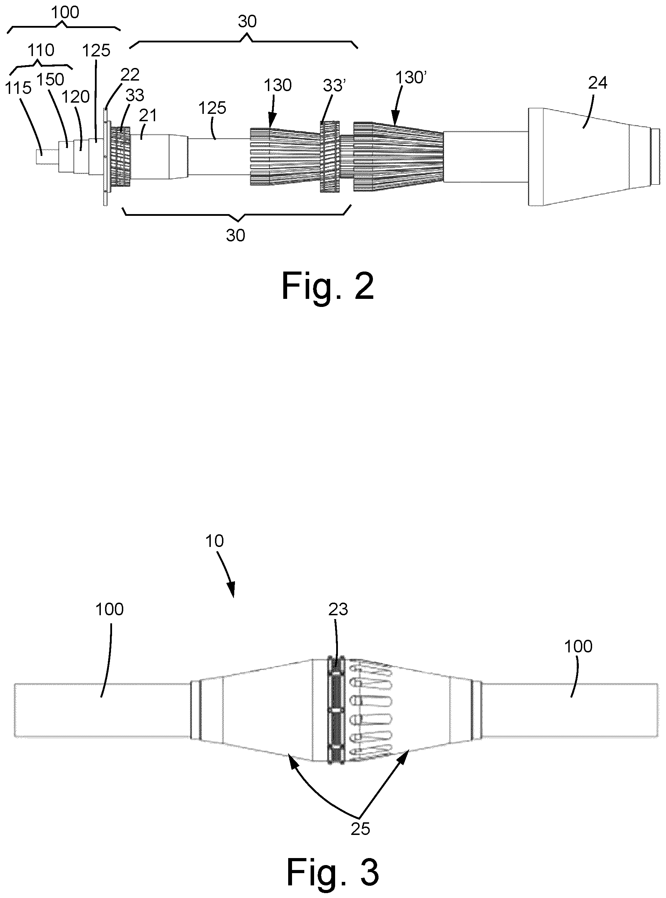

With reference to the Figure 3, a joint system 10 according to the present disclosure is schematically represented.

In particular, the joint system 10 comprises an armour joint assembly 20 in an assembled configuration when it is applied on two joined power cables 100.

As from Figure 2, each power cables 100 comprises at least one core 110 comprising an electric conductor 115, an insulation system 150 surrounding the electric conductor 115. The insulation system can be made of polymeric material by extrusion or of mass impregnated (MI) paper or paper polypropylene laminated (PPL).

For example, the power cables 100 can be a single core cable or a multi-core cable comprising a plurality of cores, for example three.

The power cable 100 can comprises one or more protective layers 120, 125 surrounding the cable core 110.

In particular, the one or more protective layers 120, 125 comprises sequentially a metallic barrier 120 and a polymeric sheath 125.

The metallic barrier 120 acts as a water barrier and as electric screen.

In case of a single core cable, the metallic barrier 120 surrounds the cable core 110.

In case of a multi-core cable, each core of the cable can be provided with its own metallic barrier 120 and polymeric sheath 125 or alternatively a single metallic barrier 120 and a single polymeric sheath 125 are provided to surround all the cores.

For example, the metallic barrier 120 can be made of aluminium, lead or copper.

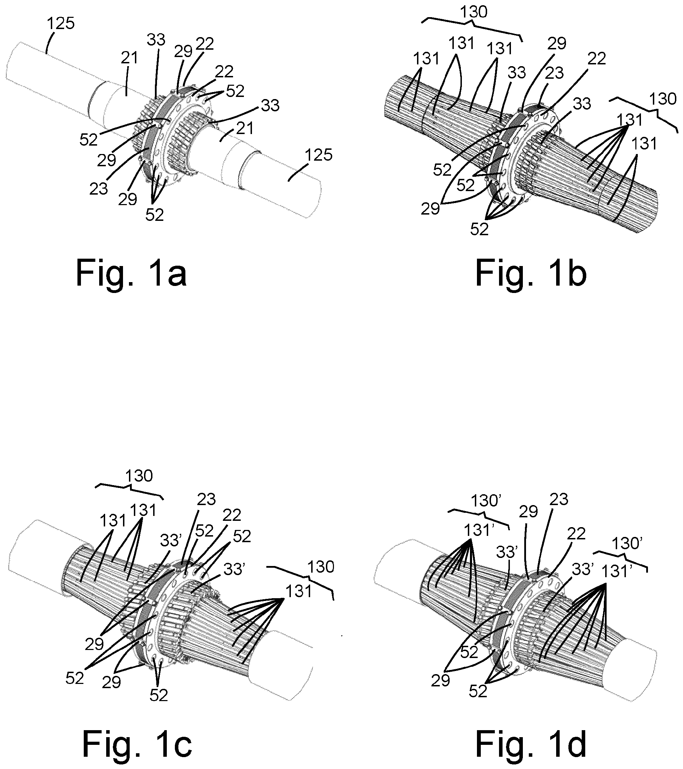

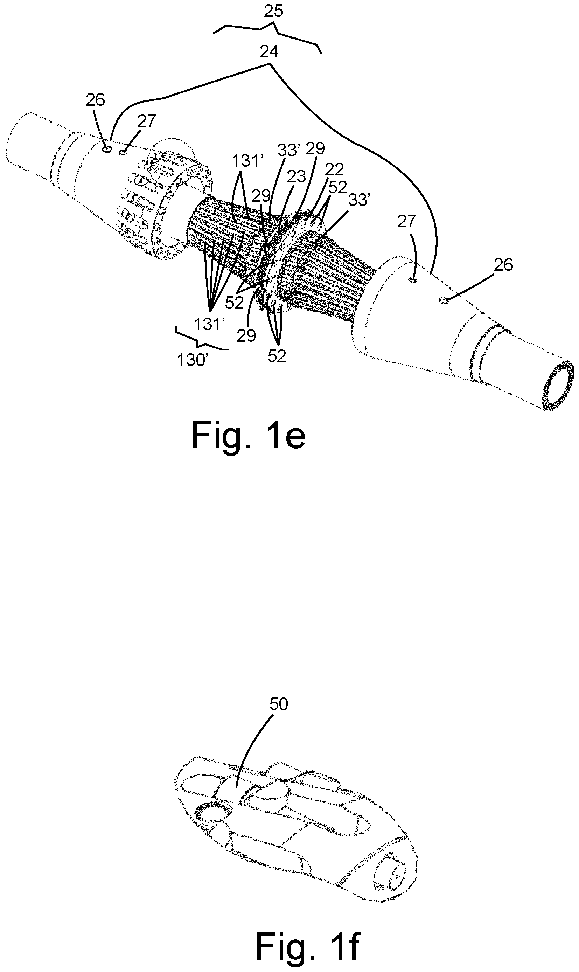

As from Figure 1e, each power cables 100 comprises also at least one armour layer 130, 130' surrounding the polymeric protective sheath in order to improve the resistance at high pressure, wherein each armour layer 130, 130' may be made by a plurality of armour wires 131, 131' helically wound on the underlying layers. Such armour wires may be made of metal or of polymeric material. The metal for the armour wires can be steel either with low or high caron content. The polymeric material can be a high tensile polymeric material such as aramid or ultra-high molecular weight polyethylene (UHMwPE) .

In an embodiment the power cables 100 can have two armour layers 130, 130' one radially on the other, in particular an inner armour layer 130 and an outer armour layer 130' surrounding the inner armour layer 130.

In an embodiment the armour layer/s can then be surrounded by a serving layer (not illustrated).

In the following as "joined power cables" it is intended to indicate two power cables having the respective cable cores and the optional protective layers/s joined together, in particular the insulation system is restored around the joined electic conductors and the one or more protective layers restored around the restored insulation system.

The armour joint assembly 20 is configured to join the armour layers of two joined power cables.

The armour joint assembly 20 comprises two tubes 21 fit over the power cables 100, wherein each tube 21 is provided with a respective flange 22.

Each tube 21 and its respective flange 22 may be made in a single piece or alternatively may be made as separate pieces integrally coupled together.

The tubes 21 and the flange 22 can be made of metallic material, for example steel.

The flanges 22 are adapted to be coupled together by means of coupling elements 29 for example plate elements as in the illustrated embodiments.

The armour joint assembly 20 comprises also a plurality of annular spacers 23 intended to be positioned in succession to each other between the two flanges 22 in order to define an initial distance between the two flanges 22.

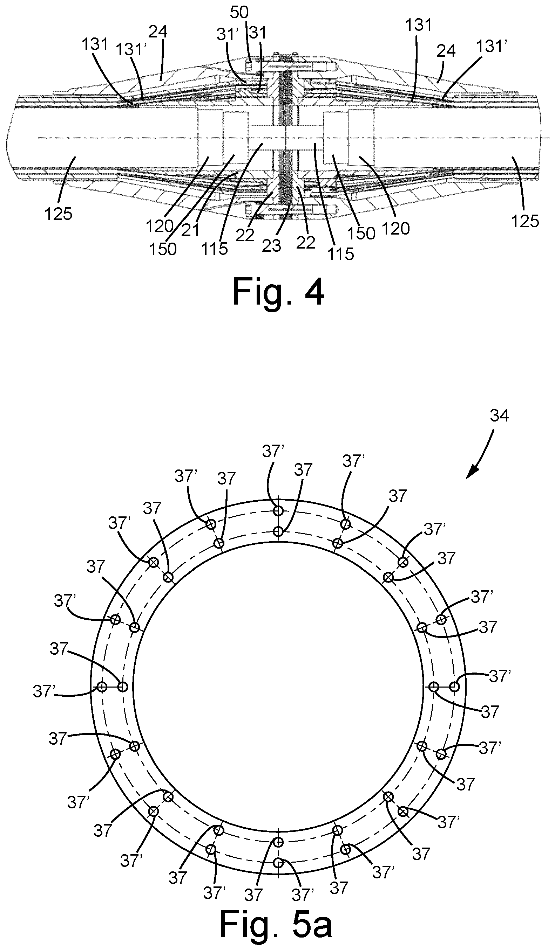

The annular spacers 23 can be made in two or more piecesso that they can be arranged around the joined power cables 100 and, in the case, taken off. The annular spacers 23 can be made of a metallic material. The annular spacers 23 have a predetermined thickness so that when they are arranged in succession between the flanges, the initial distance between the flanges 22 is a predetermined one. This initial distance depends on the type of armour wires, that is the dimensions, shape, material, and the axial stiffness of the armour wires. A number or all the annular spacers 23 can be removed at the end of installation of the armour joint assembly according to a procedure that will be described in the following. In Figure 4 the armour joint assembly 20 is shown with the annular spacers 23 still positioned between the flanges 22 before their removal.

The armour joint assembly 20 comprises also two sorting organizers 30 positioned on the side of the two flanges 22 respectively; each sorting organizers 30 comprises at least one annular element 33, 34 intended to face a respective power cable 100 and adapted to arrange respective armour wires 131, 131' of the respective power cable 100.

Furthermore, the armour joint assembly 20 comprises two cone shells 24 positioned around the respective power cables 100 and to be coupled to a respective flange 22 so as to make a closed shell 25 enclosing the respective sorting organizer 30. The cone shells 24 are provided with an loading aperture 26 for inserting resin, for example socketing resin.

In an embodiment, the cone shells 24 may be provided with at least one vent opening 27.

When the armour joint assembly 20 is mounted onto the joined power cables 100 the cone shells 24 extend along the longitudinal direction X of the cable joint and has a major outer diameter substantially matching the diameter of the respective flange 22, and a minor inner diameter directly contacting the respective power cable 100 so as to result tight against water penetration.

In the embodiment illustrated in figures 1a-e, 2 and 4 each sorting organizer 30 comprises at least one annular element 33 for supporting each armour layer of the relevant power cable 100. Each annular element 33 has a respective series of seats 31,for example in a radially outer surface.

Each annular element 33 is adapted to be positioned on the side of the respective flange 22.

In this embodiment each power cable 100 has two armour layers 130, 130' and each sorting organizer 30 comprises two annular elements 33, 33' positioned on the side of the respective flange 22 and superposed to each other in a radial direction.

The first annular element 33, that is the radially inner annular element 33, receives in its series of seats 31 respective armour wires 131 of an inner armour layer 130 of the respective power cable 100, whereas the second annular element 33', that is the radially outer annular element 33', receives in its series of seats 31' respective armour wires 131' of an outer armour layer 130' of the respective power cable 100.

In an embodiment, the series of seats 31, 31' of the annular elements 33, 33' can be made in form of a plurality of grooves carved on a radially outer surface of the annular elements 33, 33' as illustrated, for example in figures 1a-1d. Each groove can have a width such to accommodate a respective armour wire.

The seats 31, 31' in form of grooves can be substantially parallel to each other and inclined with respect to the longitudinal axis of the power cables 100 with substantially the same angle of the lay angle of the relevant armour wire layer.

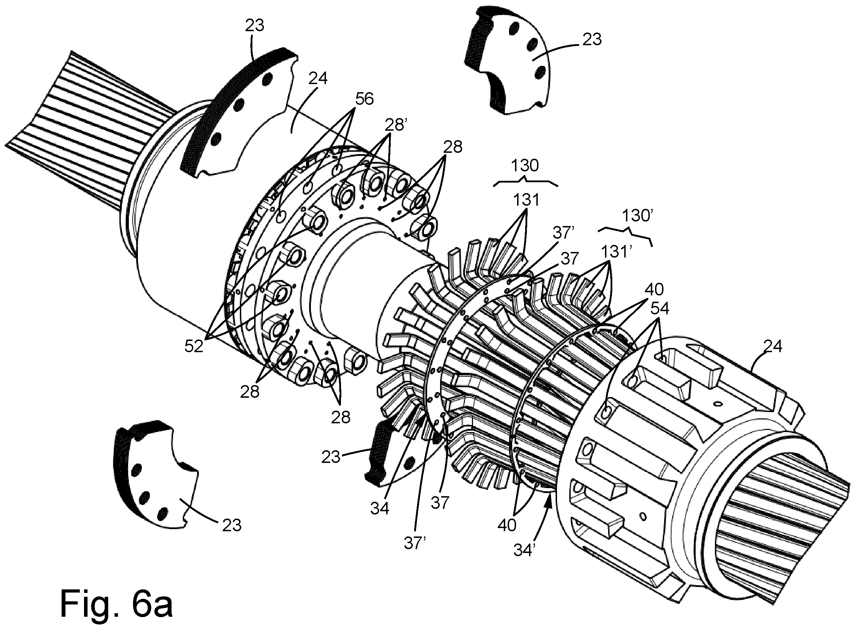

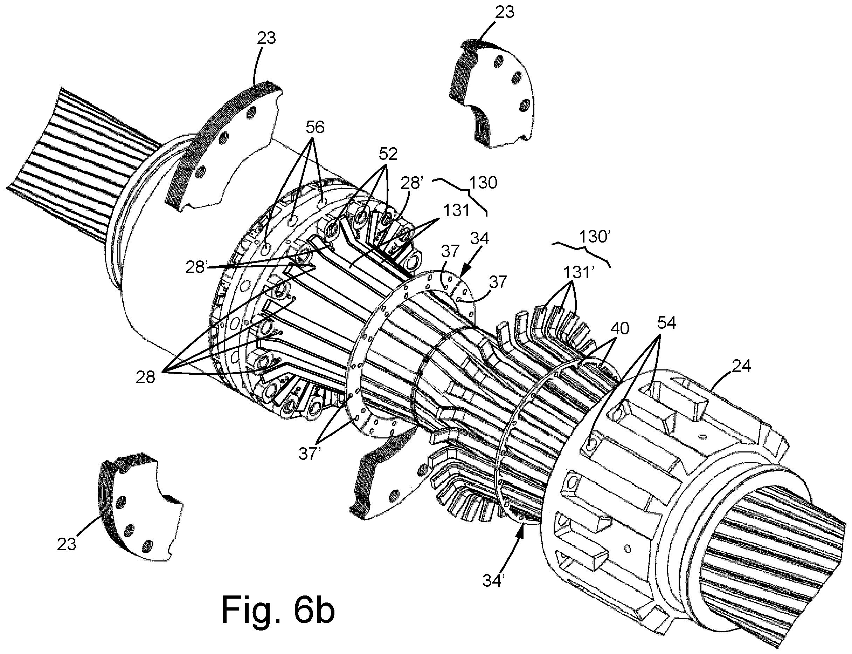

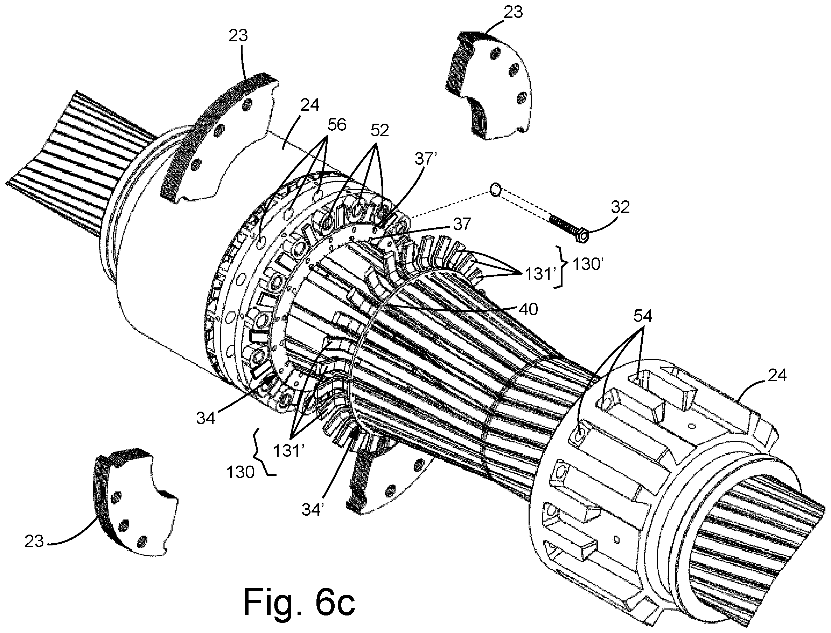

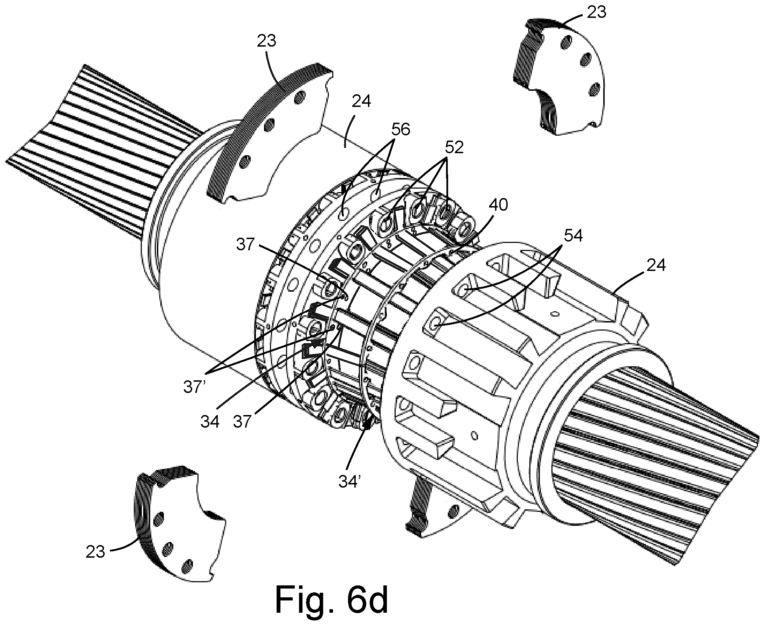

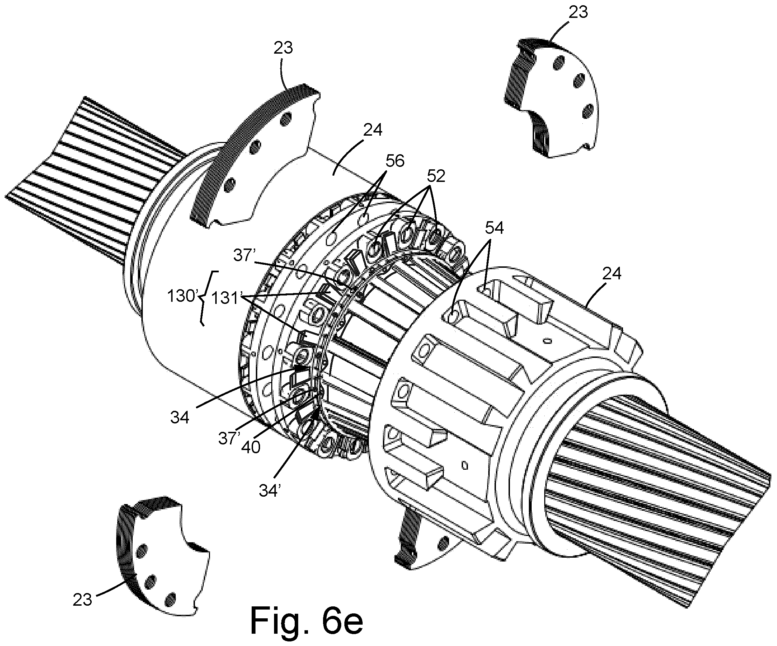

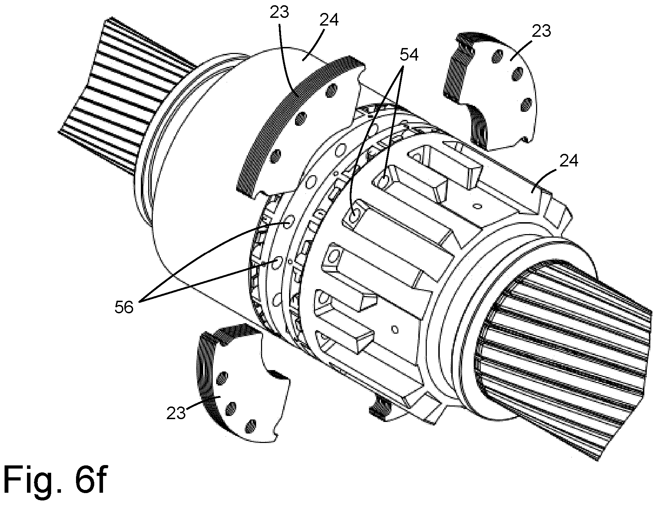

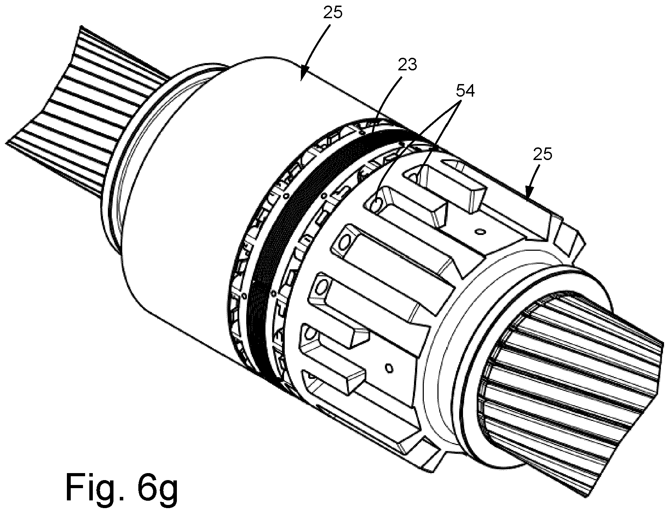

In an embodiment, each sorting organizer 30 can comprise one fastening elements 35 positioned around an annular element 33, 33' and in contact with the armour wires 131, 131' once arranged into the seats 31, 31'. In an alternative embodiment shown in Figures 6a-6g each flange 22 comprises a plurality of first holes 28, either through holes or blind holes, arranged in a circumferential fashion, and each sorting organizer 30 comprises a first annular element 34 in form of a washer arranged on the side of relevant flange 22. The first annular element 34 comprises a plurality of second holes 37, which are through holes, arranged in a circumferential fashion around the central hole in a position corresponding to that of the first holes 28 when the first annular element 34 is arranged on the side of the flange 22.

In the embodiment of the Figures 6a-6g each power cables 100 has two armour layers 130, 130', and each sorting organizer 30 comprises also a second annular element 34' in form of a washer to be arranged on the side of the first annular ring 34. The second annular element 34' comprises a plurality of third holes 40, which are through holes, arranged in a circumferential fashion around the central hole and in a position corresponding to that of the second holes 37 when the second annular element 34' is arranged on the side of the first annular element 34.

In the embodiment of the Figures 6a-6g the flange 22 and the first annular element 34 comprise two pluralities of first holes 28, 28' and two pluralities of second holes 37, 37' respectively in order to improve mechanical stability. In other embodiments also the second annular element 34' may comprise two pluralities of third holes.

The method for installing the armour joint assembly 20 will be described in the following. Such a method is performed after the joint between the electric conductors and the restoration of the insulation systems and the protective layers of the power cables have been carried out.

The method for installing the armour joint assembly 20 comprises the initial step of providing the two tubes 21 with the respective flanges 22 and the two sorting organizers 30 over the power cables 100. The flanges 22 can be positioned at the cable joint or at another suitable point, and are separated by the plurality of annular spacers 23 positioned in succession to each other.

In an embodiment, each annular spacer 23 has a thickness of 2 mm; if the annular spacers 23 are ten the initial distance between the flanges 22 is equal to about 20 mm.

After the above initial step the method for installing the armour joint assembly 20 comprises the step of positioning the armour wires 131, 131' of an armour layer 130, 130' into the respective sorting organizer 30.

In case of two armour layers 130, 130' the armour wires 131 of the inner armour layer 130 are firstly contacted by their respective annular element 33, 34, then the armour wires 131' of the outer armour layer 130' are contacted by their respective seats 33',34'.

In case the sorting organizers 30 comprise the annular elements 33, 33' supporting the armour wires 131, 131', seats 31,31' are present in form of grooves on the radially outer surface of the annular elements 33, 33', and the armour wires 131, 131' are positioned one by one in the respective grooves.

In case the sorting organizers 30 comprise the annular elements 34, 34' in form of washers, the flanges comprise the first holes 28 and length sections of the armour wires 131 of the inner armour layer 130 are firstly are arranged in a radial pattern against the relevant flange 22 taking care not to cover the first holes 28.

After the arrangement of the armour wires 131 of the inner armour layer 130 the first annular element 34 is positioned against the length sections and fastens them against the flange 22 by blocking elements 32, each passing through one second and into or through first holes 28. In an embodiment, the blocking elements 32 are threaded rods and nuts, the threaded rods having a length suitable to engage all the annular elements of each sorting organizer to the relevant flange by one or more nuts. Then the first annular element 34 and the flange 22 together can be rotated thus bringing the armour wires 131 in substantially the same winding helical direction of the armour layer on the cable. Then, length sections of the armour wires 131' of the outer armour layer 130' are arranged in a radial pattern against the relevant first annular element 34 between the blocking elements fastening the first annular element 34 on the side of the flange 22. The second annular element 34' is positioned against these length sections and fastens them against the first annular element 34 by the blocking elements 32 already present in the second holes 37 and now each passing through one third holes 40 of the second annular element 34'.

Also in this case the second annular element 34', the first annular element 34 and the flange 22 together can be rotated thus bringing the armour wires 131, 131' in substantially the same winding helical direction of the armour layer 130,130' on the cable.

After the positioning of the armour wires 131, 131' in the sorting organizers 30, the method for installing the armour joint assembly 20 comprises the step of enclosing the sorting organizers 30 each in the relevant cone shell 24 fit over the power cables 100, and coupling each cone shell 24 to the relevant flange 22 so as to make two closed shells 25.

In an embodiment, the flanges 22 have a plurality of fourth holes 52, which are through holes, arranged in a circumferential fashion in radial outer position with respect to the plurality of first holes 28, while the two cone shells 24 have each a plurality of holes arranged in a circumferential fashion and intended to be juxtaposed to the fourth holes 52 of the relevant flange. In an embodiment, as from Figure 4 one of the cone shell 24 has a plurality of fifth through holes 54, and the other cone shell 24 has a plurality of sixth blind holes 56.

At least one fixing element 50, for example a screw, is passed through at least one fifth through hole 54, then through at least one fourth hole 52 and finally inserted in at least one sixth blind hole 56.

After the fixing of the cone shells 24 to the flanges 22 thus obtaining closed shells 25, the method for installing the armour joint assembly 20 provides the filling the space within the closed shell 25 with a resin, for example a socketing resin.

For example, a suitable socketing resin is marketed under the trade mark Wirelock^{®} and Paralock^{®} by Millfield Enterprises Ltd., and Socketfast^{®} Blue by Phillystran Inc..

The filling of the closed shell 25 is made through the insertion of resin in the loading aperture 26 and may be monitored by the vent opening 27 according to known procedures, for example by observing resin leakage from the vent opening 27.

Once the resin is cured, the method for installing the armour joint assembly 20 comprises the step of taking one or more annular spacers 23 off while approaching the two flanges 22 one to the other by means of the at least one fixing element 50 thus stepwise pre-tensioning the armour wires 131, 131' to obtain a predetermined tension for all of the armour wires. If the tension is not satisfactory, the fixing element 50 are loosened allowing the removal of a suitable number of annular spacers 23.

In an embodiment, once the resin is cured the coupling elements 29 are removed, if present.

After removing a number of spacers 23 the fixing element 50 are tightened for reaching a predetermined tightening force value. The predetermined tightening force value for each fixing element 50 is the value that leads to have a predetermined tensioning force value on all the armour wires 131, 131'.

The predetermined tensioning force value to apply to all the armour wires is the force value that allows the armour layers to quickly react to tensile application to avoid any stress transfer to the conductor.

If the predetermined tightening force value is reached the coupling elements are fixed to the flanges 22 and the joint is ended.

If the predetermined tightening force value is not reached further annular spacers are installed again and the screw are tightened again trying to reach the predetermined tightening force value. This procedure is repeated until the predetermined tightening force value is reached.

## Claims

1. An armour joint assembly (20) for power cables (100) comprising:
- two tubes (21) adapted to be fit over the power cables (100), each tube (21) being provided with a respective flange (22);
- a plurality of annular spacers (23) intended to be positioned in succession to each other between the two flanges (22);
- two sorting organizers (30) positioned on the side of the two flanges (22) respectively, each sorting organizer (30) comprising at least one annular element (33,33',34,34') adapted to arrange respective armour wires (131, 131') of the respective power cable (100);
- two cone shells (24), each adapted to be positioned around the respective power cable (100) and to be coupled to the respective flange (22) so as to make a closed shell (25) enclosing the respective sorting organizer (30), the cone shells (24) being provided with a loading aperture (26) for inserting a resin.

2. The armour joint assembly (20) according to claim 1 wherein each of the two tubes (21) and the respective flange (22) are elements operatively connected one with the other.

3. The armour joint assembly (20) according to claim 1 or 2 wherein each sorting organizer (30) comprises at least one annular element (33, 33') each provided on the side of a respective flange (22) and each having at least one series of seats (31,31') and each seat (31,31') is intended to receive one armour wire (131, 131').

4. The armour joint assembly (20) according to claim 3 wherein the at least one series of seats (31,31') is provided in a radially outer surface of the one annular element (33, 33').

5. The armour joint assembly (20) according to claim 3 wherein each sorting organizer (30) comprises two of said annular elements (33, 33') positioned on the side of the respective flange (22) and superposed to each other in a radial direction, the radially inner annular element (33) being intended to to receive in its series of seats (31) respective armour wires (131) of an inner armour layer (130) of the respective power cable (100), the radially outer annular element (33') being intended to receive in its series of seats (31') respective armour wires (131') of an outer armour layer (130') of the respective power cable (100).

6. The armour joint assembly (20) according to one or more of the claims from 3 to 5 wherein the series of seats (31, 31') of the annular support elements (33, 33') are made in form of a plurality of grooves carved on the radially outer surface of the annular support elements (33, 33'), each groove having a width such to accommodate a respective wire.

7. The armour joint assembly (20) according to claim 3 wherein each sorting organizer (30) comprises one or more fastening elements (35) intended to be positioned around the armour wire (131,131') once arranged into the seats (31,31').

8. The armour joint assembly (20) according to claim 6 or 7 wherein the grooves are parallel to each other and inclined with respect to the longitudinal axis of the joint with substantially the same angle of the lay angle of the relevant armour layer (130, 130').

9. The armour joint assembly (20) according to claim 1 wherein each flange (22) comprises at least one plurality of first holes (28) arranged in a circumferential fashion, and each sorting organizer (30) comprises a first annular element (34) in form of a washer having a central hole and intended to be arranged on the side of the relevant flange (22), the first annular element (34) comprising at least one plurality of second holes (37) arranged in a circumferential fashion around the central hole and intended to juxtapose the plurality of second holes (37) to the plurality of first holes (28).

10. The armour joint assembly (20) according to claim 9 wherein each sorting organizer (30) comprises a second annular element (34') in form of a washer having a central hole intended to be arranged on the side of the relevant first annular element (34), the second annular element (34') comprising at least one plurality of third holes (40) arranged in a circumferential fashion around the central hole and intended to be juxtaposed to the plurality of second holes (37).

11. The armour joint assembly (20) according to claim 1 wherein the cone shells (24) are provided with a vent opening (27).

12. The armour joint assembly (20) according to claim 1 wherein the flanges (22) have a plurality of fourth hole (52) arranged in a circumferential fashion in radial outer position with respect to a plurality of first holes (28).

13. The armour joint assembly (20) according to claim 12 wherein one of the cone shell (24) has a plurality of fifth through holes (54), and the other cone shell 24) has a plurality of sixth blind holes (56), fifth through holes (54) and the sixth blind holes (56) arranged in a circumferential fashion and intended to be juxtaposed to the fourth holes (52) of the relevant flange (22).

14. A joint system (10) comprising:
- a first power cable (100) and a second power cable (100), each one of the power cables (100) comprising at least one cable core (110) in turn comprising an electric conductor (115), an insulation system (150) surrounding the electric conductor (115); optionally one or more protective layers (120, 125) surrounding the cable core (110), and one or more armour layers (130, 130') surrounding the cable core (110) and, if any, one or more protective layers (120, 125), wherein the electric conductors (115) of the submarine power cables (100) are electrically joined to each other to form a core joint;
- an armour joint assembly (20) according to one or more of the previous claims positioned around the power cables (100).

15. A method for installing an armour joint assembly (20) according to one or more of the claims 1-9 comprising the steps of:
- providing the two tubes (21) with respective flanges (22) and the two sorting organizers (30) positioned on the side the two flanges (22) respectively the flanges (22) being separated by the plurality of annular spacers (23) positioned in succession to each other in order to define an initial distance between the two flanges;
- operatively associating each wire (131, 131') of an armour layer (130, 130') to the sorting organizers (30) ;
- enclosing the sorting organizers (30) in two cone shells (24) provided with at least one loading aperture (26) ;
- fixing each cone shell (24) to the respective flange (22) by means of at least one fixing element (50) passing through a relevant fifth through hole (50), a relevant forth hole (52) and being inserted into a relevant sixth blind hole (56) to make a closed shell (25) forming a space;
- filling the space within each closed shell (25) with a socketing resin;
- once the socketing resin is cured, taking one or more annular spacers (23) off while approaching the two flanges (22) one to the other by means of the at least one fixing element (50) thus stepwise pre-tensioning the armour wires to obtain a predetermined tension for all of the armour wires.
